(19) Europäisches Patentamt

European Patent Office

Office européen des brevets

(11) **EP 1 098 142 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(51) Int Cl.:
*F24D 3/08* (2006.01) *F24H 1/00* (2006.01)

(21) Anmeldenummer: **00123694.2**

(22) Anmeldetag: **31.10.2000**

(54) **Verfahren zur Regelung der thermischen Leistung eines Brennstoffzellen-Systems**

Procedure for the regulation of the thermal performance of a fuel cell system

Procédure de règlement de la performance thermique d'un système de cellules de combustible

(84) Benannte Vertragsstaaten:
**AT BE CH CY DE DK ES FI FR GB GR IE IT LI LU MC NL PT SE**

(30) Priorität: **08.11.1999 AT 187499**

(43) Veröffentlichungstag der Anmeldung:
**09.05.2001 Patentblatt 2001/19**

(73) Patentinhaber: **Vaillant GmbH**
**42859 Remscheid (DE)**

(72) Erfinder:
• **Paulus, Jochen**
**42655 Solingen (DE)**
• **Thomas, Rolf**
**93167 Falkenstein (DE)**

(74) Vertreter: **Hocker, Thomas**
**Vaillant GmbH**
**Berghauser Strasse 40**
**42859 Remscheid (DE)**

(56) Entgegenhaltungen:
**DE-A- 3 716 297** **DE-A- 19 517 813**

**Beschreibung**

Die Erfindung bezieht sich auf ein Verfahren zur Regelung der thermischen Leistung eines Brennstoffzellen-Systems gemäß dem Oberbegriff des Anspruches 1.

Nach bekannten Verfahren wird das Brennstoffzellen-System im wesentlichen mit konstanter thermischer Leistung betrieben, wobei bei Erreichung des vorgesehenen Temperaturniveaus des hydraulischen Systems der Betrieb meist eingestellt und nach Absinken des Temperaturniveaus um eine entsprechende Hysterese wieder aufgenommen wird.

Dabei ergibt sich jedoch der Nachteil, daß es zu einer hohen Anzahl von Ein/Ausschaltungen kommt, die sich negativ auf die Lebensdauer des Brennstoffzellen-Systems auswirken.

Aus der DE 195 17 813 A1 ist ein Verfahren zur Regelung der elektrischen Leistung einer Brennstoffzelle bekannt, bei dem als Regelgröße die Vor- oder Rücklauftemperatur eines Nutzwärmekreislaufs herangezogen wird. Das Regelverfahren erlaubt jedoch keine individuelle Anpassung der Regelstrategie an die thermische Trägheit des Nutzwärmekreislaufs.

Ziel der Erfindung ist es, diese Nachteile des Standes der Technik zu vermeiden und ein Verfahren der eingangs erwähnten Art vorzuschlagen, das einen möglichst kontinuierlichen Betrieb des Brennstoffzellen-Systems ergibt.

Erfindungsgemäß wird dies bei einem Verfahren der eingangs erwähnten Art durch die kennzeichnenden Merkmale des Anspruches 1 erreicht.

Durch die vorgeschlagenen Maßnahmen ist es möglich, die Leistung des Brennstoffzellen-Systems entsprechend zu vermindern, wodurch die Betriebszeit des Brennstoffzellen-Systems bei jedem Aufheizen des hydraulischen Systems entsprechend verlängert werden kann, wodurch sich die Zahl der Schaltspiele des Brennstoffzellen-Systems entsprechend vermindert.

Durch die Merkmale des unabhängigen Anspruches läßt sich das erfindungsgemäße Verfahren sehr einfach durchführen, wobei gleichzeitig ein entsprechender Komfort für die Benutzer des hydraulischen Systems sichergestellt ist. Es wird vermieden, dass die Brennstoffzelle in einem unwirtschaftlichen Teillastbereich, in dem der Wirkungsgrad drastisch abfällt und bzw. oder bestimmte Komponenten des Brennstoffzellen-Systems aus anderen Gründen nicht betrieben werden sollen oder können, betrieben wird. Hierbei wird die Minimallast des Brennstoffzellen-Systems ab einer bestimmten Temperatur des hydraulischen Systems eingestellt. Es ist dabei möglich, die Schalttemperatur, ab der das Brennstoffzellen-System mit Minimallast betrieben wird, an das Heizungssystem anzupassen. So bewirkt beispielsweise ein großer Speicher eine langsamere Temperaturerhöhung, d.h. einen kleineren Temperaturgradienten, als ein kleiner Speicher.

Durch die Merkmale des Anspruches 2 ist es möglich, eine besonders langsame Annäherung an den Sollwert des Temperaturniveaus des hydraulischen Systems zu ermöglichen. Dadurch ergeben sich besonders lange Betriebszeiten des Brennstoffzellen-Systems bei jedem Aufheiz-Zyklus und dadurch eine sehr weitgehende Verminderung der Schaltspiele des Brennstoffzellen-Systems.

Durch die Merkmale des Anspruchs 3 ergibt sich der Vorteil, dass die modulierende thermische Leistung des Brennstoffzellen-Systems an das Heizungssystem angepasst werden kann. Hierbei wird beispielsweise auch die Wärmeanforderung durch die Heizkörper, d.h. deren Anzahl, Größe sowie die Einstellung der Thermostaten, berücksichtigt.

Durch die Merkmale des Anspruchs 4 werden mögliche Regelalgorithmen für die Verarbeitung der zu berücksichtigenden Temperaturen beschrieben.

Durch die Merkmale des Anspruches 5 ergibt sich der Vorteil, daß eine sehr genaue Ermittlung des Temperaturniveaus des hydraulischen Systems möglich ist, unabhängig von den jeweiligen Betriebsbedingungen.

Die Erfindung wird nun anhand der Zeichnung näher erläutert. Dabei zeigen:

Fig. 1 schematisch eine Anlage mit einem Brennstoffzellen-System und einem hydraulischen System

Fig. 2 ein Diagramm, das schematisch den Verlauf der Regelung zeigt und

Fig. 3 ein Diagramm, das schematisch die Regelung der thermischen Leistung gemäß zweier Speicherfühler-Temperaturen zeigt.

Gleiche Bezugszeichen bedeuten in allen Figuren gleiche Einzelteile.

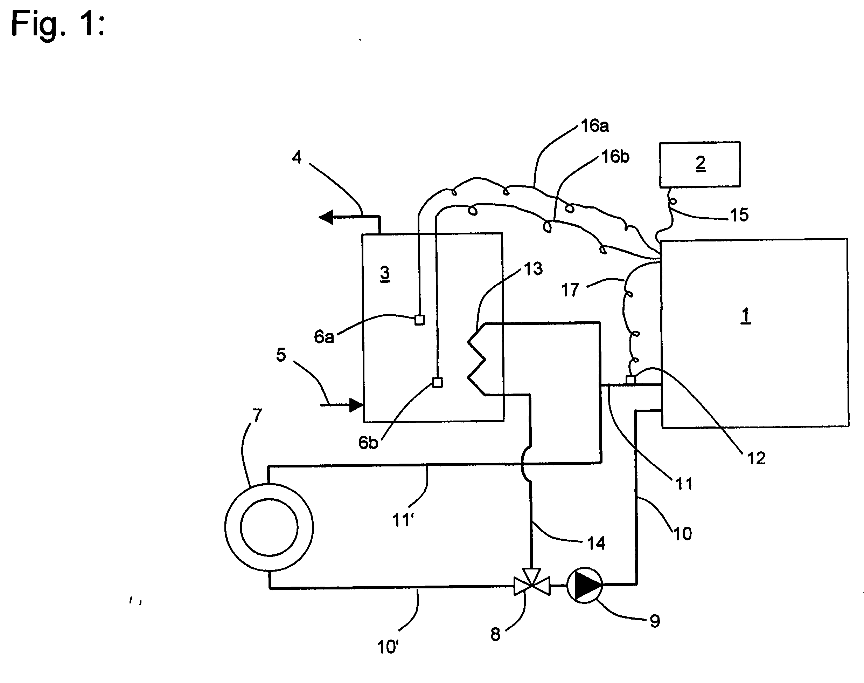

Bei der in der in Fig. 1 dargestellten Anlage ist ein Brennstoffzellen-System 1 über eine Vorlaufleitung 11 mit einem Wärmetauscher 13 verbunden, der in einem Speicher 3 angeordnet ist.

Der Wärmetauscher 13 ist über eine Anschlußleitung 14 mit einem Umschaltventil 8 verbunden, an dessen beiden weiteren Anschlüssen eine Rücklaufleitung 10, in der eine Umwälzpumpe 9 angeordnet ist, und eine von einer Heizkörperanordnung 7 kommende Heizungs-Rücklaufleitung 10' angeschlossen sind.

Die Heizkörperanordnung 7 ist über eine Heizungs-Vorlaufleitung 11' mit der Vorlaufleitung 11 verbunden. Die Heizkörperanordnung 7 bildet gemeinsam mit dem Speicher 3 und den erforderlichen Verbindungsleitungen ein hydraulisches System, das vom Brennstoffzellen-System 1 mit Heizwasser versorgt wird.

An das Brennstoffzellen-System 1 ist eine Regelung 2 über eine Steuerleitung 15 angeschlossen. Weiters sind an das Brennstoffzellen-System 1 Temperaturfühler 6a und 6b, die in unterschiedlichen Höhen im Speicher 3 angeordnet sind, über Signalleitungen 16a, 16b angeschlossen. Außerdem ist ein Temperaturfühler 12 in der Vorlaufleitung 11 angeordnet, der über eine Signalleitung 17 mit dem Brennstoffzellen-System 1 verbunden ist.

In den Speicher 3 mündet in dessen untersten Bereich eine Speicherzulauf-Leitung 5, wobei aus dem obersten Bereich des Speichers 3 eine Speicher-Vorlaufleitung 4 wegführt.

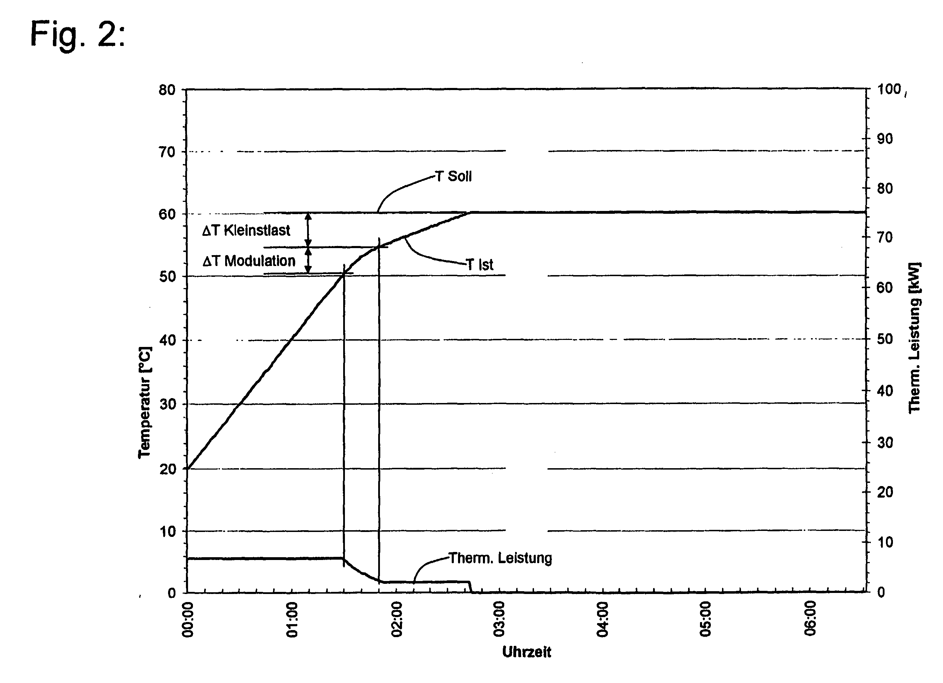

Die Fig. 2 zeigt ein Beispiel für die Regelung einer Anlage gemäß der Fig. 1 nach der Erfindung.

Die Aufheizung des hydraulischen Systems erfolgt, wie aus der Fig. 2 zu ersehen ist, bis zu einem bestimmten Wert, im konkreten Fall bis zu einer Temperatur von 50°C, mit voller thermischer Leistung, z. B. 6kW. Danach wird die thermische Leistung des Brennstoffzellen-Systems 1 moduliert und langsam bis auf die thermische Mindestleistung von z.B.2kW reduziert.

Dadurch tritt mit Beginn der Modulation der thermischen Leistung, die unterhalb einer vorgewählten Soll-Temperatur von z.B. 60°C, einsetzt, eine Verflachung des Temperaturanstieges im hydraulischen System auf. Bei Erreichung der thermischen Mindestleistung des Brennstoffzellen-Systems 1 ergibt sich wieder ein linearer Temperaturanstieg im hydraulischen System, der allerdings erheblich flacher verläuft als zu Beginn der Aufladung. Wenn das Brennstoffzellen-System 1 abgeschaltet wird, kommt es zu keinem weiteren Temperaturanstieg im hydraulischen System.

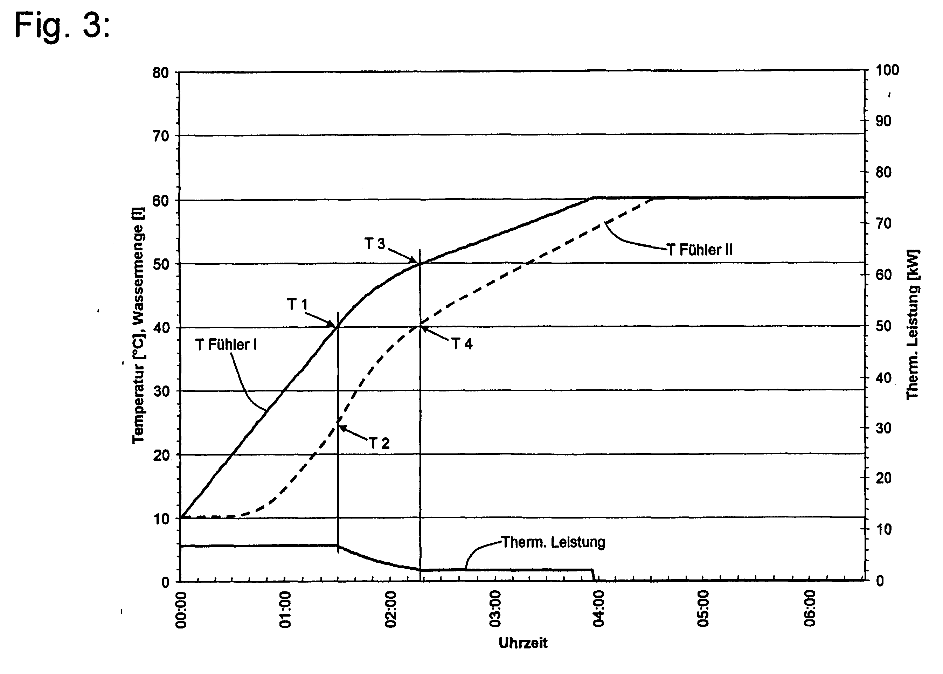

Aus dem Diagramm nach der Fig. 3 ist der Verlauf der Temperaturen an den Temperaturfühlern 6a (Fühler 1) und 6b (Fühler 2) während der Aufheizung des hydraulischen Systems zu ersehen.

Bei Erreichen der Temperaturen T1 bzw. T2 an den Fühlern 6a, 6b beginnt die Modulation der thermischen Leistung des Brennstoffzellen-Systems 1, wobei ab den Temperaturen T3, T4 das Brennstoffzellen-System mit der thermischen Mindestleistung betrieben wird. Sobald im Bereich des Temperaturfühlers 6a die vorgesehene Soll-Temperatur erreicht ist, wird die thermische Leistung des Brennstoffzellen-Systems abgeschaltet.

Aufgrund des thermischen Speichervermögens des Brennstoffzellen-Systems 1 und des Umstandes, daß die Umwälzpumpe auch nach der Abschaltung des Brennstoffzellen-Systems 1 weiter betrieben wird, wird für eine bestimmte Zeit weiter Heizwasser in den Speicher 3 gefördert, wodurch die Temperatur im Bereich des Temperaturfühlers 6b weiter bis zur Solltemperatur ansteigt.

Die Modulation der thermischen Leistung des Brennstoffzellen-Systems 1 kann beispielsweise als logarithmische, exponentielle oder lineare Funktion erfolgen. Gemäß Fig. 2 und Fig. 3 stellt in den folgenden, beispielhaften Regelungsbeispielen und -algorithmen $T_{Ist}$ die jeweils aktuelle Temperatur des Temperaturfühlers dar. $T_{Soll}$ ist die Solltemperatur des hydraulischen Systems. Unterhalb der Temperatur $T_1$ des Temperaturfühlers wird das Brennstoffzellen-System 1 mit voller thermischer Leistung $P_{max}$ betrieben. Oberhalb $T_1$ wird die thermische Leistung P reduziert. Oberhalb der Temperatur $T_3$ wird das Brennstoffzellen-System 1 lediglich mit thermischer Mindestleistung $P_{min}$ betrieben.

Im Modulationsbereich kann die Leistung P beispielsweise in linearer Abhängigkeit von der Temperaturabweichung ($T_{Soll} - T_{Ist}$) erfolgen.

$$P = P_{max} \cdot \frac{T_{Soll} - T_{Ist}}{T_{Soll} - T_1}$$

Die Steigung kann verändert werden, indem statt der Solltemperatur $T_{Soll}$ eine andere Temperaturkonstante $T_c$ verwendet wird.

$$P = P_{max} \cdot \frac{T_c - T_{Ist}}{T_c - T_1}$$

Die Leistungsanpassung kann auch als e-Funktion erfolgen:

$$P = P_{max} \cdot \frac{1}{e^{(C_1 \cdot (T_{Ist} - T_1))}}$$

Hierbei wird die Leistung anfangs schnell reduziert und danach die Leistungsreduktion reduziert. $C_1$ ist hierbei eine Konstante, die der Anpassung der Leistungsänderung dient. Bei einer logarithmischen Leistungsanpassung wird die Leistung erst wenig und später stärker reduziert.

$$P = P_{max} \cdot \frac{1}{\ln\left(1 + C_2 \cdot \dfrac{T_{Soll} - T_1}{T_{Soll} - T_{Ist}}\right)}$$

Die Konstante $C_2$ dient - wie auch die folgenden Konstanten $C_3$ und $C_4$ - der Anpassung des Temperaturgradienten dT/dt. Es sind auch Anpassungen gemäß

$$P = P_{max} \cdot \frac{1}{\left(\dfrac{T_{Soll} - T_1}{T_{Soll} - T_{Ist}}\right)^n}$$

möglich. Ist n>1, z. B. quadratisch, d.h. n=2, so ähnelt der Verlauf der Anpassung mit Hilfe der e-Funktion. Bei n<1, z. B. Wurzelfunktion, d.h. n=1/2, ist die Charakteristik ähnlich dem Logarithmus. Wird $T_{Soll}$ durch eine andere Temperatur $T_C$ ersetzt, so kann auch hier der Temperaturgradient angepaßt werden.

Zusätzlich kann eine vorgenannte Formel mit einem Zeitglied, beispielsweise $1/e^t$ oder $1/(\ln(t+1)+1)$, multipliziert werden. Auch ist es möglich die Leistung P ab der Modulationsgrenze $T_1$ rein zeitbasiert zu regeln.

$$P = P_{max} \cdot \frac{1}{e^{C_3 \cdot t}}$$

$$P = P_{max} \cdot \frac{1}{\ln\left(C_4 \cdot (t+1)\right) + 1}$$

**Patentansprüche**

1. Verfahren zur Regelung der thermischen Leistung eines Brennstoffzellen-Systems, das ein hydraulisches System, das eine Heizkörperanordnung (7) und bzw. oder einen Speicher (3) umfaßt, über eine Vorlauf- und eine Rücklaufleitung (10, 11) mit Heizwasser versorgt, in dem die thermische Leistung des Brennstoffzellen-Systems (1) in Abhängigkeit vom Temperaturniveau des hydraulischen Systems gesteuert wird, wobei bis zur Erreichung eines vorbestimmten, unterhalb eines vorgegebenen Soll-Temperaturniveaus liegenden Temperaturniveaus das Brennstoffzellen-System (1) mit voller thermischer Leistung betrieben wird, danach die thermische Leistung des Brennstoffzellen-Systems reduziert wird und bei Unterschreiten einer bestimmten Temperaturdifferenz des Temperaturniveaus des hydraulischen Systems zum Soll-Temperaturniveau das Brennstoffzellen-System mit einer konstanten, thermischen Minimalleistung betrieben wird, **dadurch gekennzeichnet, dass** die Temperaturdifferenz des Temperaturniveaus des hydraulischen Systems zum Soll-Temperaturniveau, bei der die modulierende thermische Leistung des Brennstoffzellen-Systems (1) zur Minimalleistung wechselt, in Abhängigkeit des Temperaturgradienten des hydraulischen Systems angepasst wird.

**2.** Verfahren nach Anspruch 1, **dadurch gekennzeichnet, dass** die thermische Leistung des Brennstoffzellen-Systems mit steigender Annäherung des Temperaturniveaus des hydraulischen Systems an den Soll-Wert vermindert wird.

**3.** Verfahren nach Anspruch 1, **dadurch gekennzeichnet, dass** die thermische Leistung des Brennstoffzellen-Systems (1) in Abhängigkeit des Temperaturgradienten des hydraulischen Systems angepaßt wird.

**4.** Verfahren nach Anspruch 1, **dadurch gekennzeichnet, dass** die thermische Leistungsanpassung des Brennstoffzellen-Systems (1) unter Berücksichtigung einer logarithmischen, exponentiellen und bzw. oder linearen Funktion vorzugsweise des Soll-Temperaturniveaus des hydraulischen Systems, den Temperaturen des hydraulischen Systems und bzw. oder den Schalttemperaturen erfolgt.

**5.** Verfahren nach einem der Ansprüche 1 bis 4, **dadurch gekennzeichnet, dass** zur Ermittlung des Temperaturniveaus des hydraulischen Systems die Temperatur an mehreren Stellen, z. B. im Brauchwasser-Speicher an unterschiedlichen Stellen, erfaßt wird.

## Claims

**1.** A process for the control of the thermal output of a fuel cell system which supplies a hydraulic system comprising a radiator arrangement (7) and/or a storage tank (3) with heating water via a feed line and a return line (10, 11), in which the thermal output of the fuel cell system (1) is controlled as a function of the temperature level of the hydraulic system, with the fuel cell system (1) being operated at full thermal output until a predefined temperature level is reached which is lower than a predetermined setpoint temperature level, then the thermal output of the fuel cell system being reduced and, when the temperature difference of the temperature level of the hydraulic system relative to the setpoint temperature level of the fuel cell system falls short of a certain value, being operated at a constant minimum thermal output, **characterised in that** the temperature difference of the temperature level of the hydraulic system relative to the setpoint temperature level at which the modulating thermal output of the fuel cell system (1) changes to the minimum output is adapted dependent on the temperature gradient of the hydraulic system.

**2.** A process as claimed in Claim 1 **characterised in that**, as the temperature level of the hydraulic system gradually approaches the setpoint value, the thermal output of the fuel cell system is reduced.

**3.** A process as claimed in Claim 1 **characterised in that** the thermal output of the fuel cell system (1) is adapted dependent on the temperature gradient of the hydraulic system.

**4.** A process as claimed in Claim 1 **characterised in that** the thermal output of the fuel cell system (1) is adapted with regard to a logarithmic, exponential and/or linear function preferably of the setpoint temperature level of the hydraulic system, the temperatures of the hydraulic system and/or the switching temperatures.

**5.** A process as claimed in any of the Claims 1 to 4, **characterised in that**, for determining the temperature level of the hydraulic system, the temperature is measured at several points, for example at different points in the service water storage tank.

## Revendications

**1.** Procédé permettant le réglage de la puissance thermique d'une unité à piles à combustible laquelle alimente en eau chaude, par un tuyau d'alimentation et un tuyau de retour (10, 11), un système hydraulique qui comprend un ensemble de corps de chauffe (7) et/ou un réservoir (3) où la puissance thermique de l'unité à piles à combustible (1) est réglée en fonction du niveau de température du système hydraulique, l'unité à piles à combustible (1) marchant à pleine puissance thermique jusqu'-au moment où un niveau de température est atteint inférieur à un niveau de température de consigne, la puissance thermique de l'unité à piles à combustible étant ensuite réduite et en cas de diminution d'une certaine différence de température du niveau de température du système hydraulique vis-à-vis du niveau de température de consigne, l'unité à piles à combustible marche à une puissance thermique minimale, procédé **caractérisé par le fait que** la différence de température du niveau du système hydraulique vis-à-vis du niveau de température de consigne où la puissance thermique modulant de l'unité (1) par rapport à la puissance minimale, est adaptée en fonction du gradient de température du système hydraulique.

2. Procédé suivant la revendication 1, **caractérisé par le fait que** la puissance thermique de l'unité à piles à combustible est diminuée suivant l'augmentation du niveau de température du système hydraulique jusqu'à la consigne.

3. Procédé suivant la revendication 1, **caractérisé par le fait que** la puissance thermique de l'unité à piles à combustible (1) est adaptée en fonction du gradient de température du système hydraulique.

4. Procédé suivant la revendication 1, **caractérisé par le fait que** l'adaptation de la puissance thermique de l'unité (1) se fait compte tenu d'une fonction logarithmique, exponentielle et/ou linéaire de préférence du niveau de température de consigne du système hydraulique, des températures du système hydraulique et/ou des températures de consigne.

5. Procédé suivant la revendication 1, **caractérisé par le fait que** pour déterminer le niveau thermique du système hydraulique, la température est mesurée en plusieurs points p.ex. dans le chauffe-eau sanitaire à accumulation en différents points.

# Fig. 1:

Fig. 2:

Fig. 3: